# EUROPÄISCHE PATENTSCHRIFT

(11) **EP 0 594 026 B1**
(45) Veröffentlichungstag und Bekanntmachung des Hinweises auf die Patenterteilung: **28.01.1998**
(21) Anmeldenummer: 93116432.1
(22) Anmeldetag: 11.10.1993
(51) Int. Cl.: C08F 8/28

(54) **Polyvinylacetale, die emulgatorfreie wässrige Dispersionen und redispergierbare trockene Pulver bilden können, Verfahren zu ihrer Herstellung und ihre Verwendung**
Polyvinyl acetals capable of forming emulsifier-free aqueous dispersions and redispersible dry powders, process for their manufacture and use
Polyvinylacétals capables de former des dispersions aqueuses sans émulsifiants et des poudres sèches redispersables, leur procédé de préparation et leur application

(30) Priorität: 19.10.1992 DE 4235151
(43) Veröffentlichungstag der Anmeldung: 27.04.1994
(73) Patentinhaber: Clariant GmbH, 65929 Frankfurt am Main (DE)
(72) Erfinder: Kroggel, Matthias, Dr., D-65779 Kelkheim (DE); Schindler, Herrmann, Dr., D-65719 Hofheim-Wallau (DE)

(56) Entgegenhaltungen:
- EP-A- 0 283 180
- EP-A- 0 368 832
- DE-A- 2 130 283
- FR-A- 2 568 573
- CHEMICAL ABSTRACTS, vol. 78, no. 8, 26. Februar 1973, Columbus, Ohio, US; abstract no. 44297s, YAMAMOTO, YUICHI 'POLYVINYL ALCOHOL STYRYLSULFONATE' Seite 24 ;Spalte 1 ; & JP-A-47 031 952 (YAMAMOTO, YUICHI) 14 November 1972

## Beschreibung

Die Erfindung betrifft Polyvinylacetale, die emulgator- und tensidfreie wäßrige Dispersionen und redispergierbare trockene Pulver bilden können, hergestellt aus copolymeren Polyvinylalkoholen (PVAL-en), die zur Dispersionsbildung ausreichende Anteile an Sulfosalzgruppen tragenden Comonomereinheiten enthalten, in wäßriger Lösung durch Umsetzung mit Aldehyden unter säurekatalysierten Acetalisierungsbedingungen in Abwesenheit von niedermolekularen Emulgatoren oder Tensiden unter Bildung von stabilen wäßrigen Polyvinylacetaldispersionen sowie gegebenenfalls Entzug des Wasseranteils aus den Dispersionen durch Sprühtrocknung oder Gefriertrocknung und Gewinnung des Polymerisatanteils der Dispersionen in trockener, redispergierbarer Pulverform, Verfahren zur Herstellung der Polyvinylacetale und ihrer wäßrigen emulgatorfreien Dispersionen sowie ihre Verwendung sowohl in wäßriger Dispersionsform als auch in trockener redispergierbarer Pulverform.

Polyvinylacetale werden bekanntlich für zahlreiche Anwendungen eingesetzt, beispielsweise zur Herstellung von Folien, als Bindemittel in Lackharzen, als Bindemittel in Photodruckplatten, als Bindemittelharze in Druckfarben und Korrosionschutzlacken, als Schutzummantelung von Elektrokabeln, als Sperrschichtmaterial bei der Papierveredlung. Polyvinylacetale werden dabei entweder in Substanz, z.B. als Schmelze, gegebenenfalls in plastifizierter, weichmacherhaltiger Form, oder in Form von wäßrigen Dispersionen oder in Form von Lösungen in organischen Lösungsmitteln eingesetzt. Insbesondere aus Gründen der Umweltbelastung, der Toxizität und der Brandgefahr versucht man neuerdings in verstärktem Maß, Systeme mit organischen Lösungsmitteln, falls formulierungstechnisch möglich, durch wäßrige Systeme zu ersetzen, so daß wäßrige Polyvinylacetaldispersionen zunehmend an Bedeutung gewinnen.

Die Herstellung von wäßrigen Polyvinylacetaldispersionen ist bekanntermaßen aufwendig, da sie in der Regel in Form von Sekundärdispersionen erfolgt, wobei z.B. pulverförmige Polyvinylacetale mit großen Mengen an Emulgator vermischt oder verknetet und die Mischungen, gegebenenfalls unter Mitverwendung von organischen Lösungsmitteln, in Wasser dispergiert werden.

Die zur Herstellung von Sekundärdispersionen verwendeten Emulgatoren sind üblicherweise bekannte niedermolekulare tensioaktive Verbindungen. Deren Mitverwendung hat u.a. zur Folge, daß bei den aus solchen stark emulgatorhaltigen Dispersionen hergestellten Polyvinylacetalfilmen durch Kontakt mit anderen Stoffen, wie z.B. Wasser oder organischen Lösungsmitteln, die niedermolekularen Bestandteile im Laufe der Zeit leicht herausgelöst werden können, was zu einer fortlaufenden Veränderung der Filmeigenschaften führt.

Aus der DE-A 3246605 sind emulgatorfreie Polyvinylacetaldispersionen bekannt, die durch Acetalisierung von Pfropfpolyvinylalkoholen erhalten werden können. Bei den hierbei zugrundeliegenden Pfropf-PVAL-en handelt es sich um Verbindungen, deren PVAL-gruppen auf eine Polyethylenglykolpfropfgrundlage aufgepfropft sind. Ihre Herstellung kann durch radikalisch initiierte Pfropfpolymerisation von Vinylacetat auf Polyethylenglykolmoleküle und nachfolgende Umwandlung der aufgepfropften Polyvinylacetatgruppen durch Hydrolyse zu PVAL-gruppen erfolgen. Die Synthese von auf Polyethylenglykol aufgepfropften PVAL-en ist u.a. kostspielig und in technischem Maßstab nicht leicht reproduzierbar. Aus den Pfropfpolyvinylacetalen hergestellte Filme sind außerdem stärker hydrophil und daher wasserempfindlicher als vergleichbare nichtgepfropfte Polyvinylacetalfilme.

In EP-A 0 283 180 und EP-A 0 368 832 sind Polyvinylacetale beschrieben, die Benzolsulfonat-Einheiten ausschließlich in den über die Aldehyde eingeführten Seitengruppen enthalten.

Der vorliegenden Erfindung lag somit die Aufgabe zugrunde, emulgator- und tensidfreie wäßrige Polyvinylacetaldispersionen verfügbar zu machen, welche die vorstehend beschriebenen Nachteile nicht aufweisen und die außerdem nach kostengünstigen Methoden mit guter Reproduzierbarkeit erhältlich sind.

Es wurde nun überraschenderweise gefunden, daß man Polyvinylacetale, die stabile wäßrige Dispersionen bilden können, in wäßriger Dispersionsform oder durch Trocknung der Dispersionen in Pulverform erhalten kann, wenn man copolymere Polyvinylalkohole, die Vinylsulfonatgruppen tragende Comonomereinheiten in ihrer Salzform in der erforderlichen Menge enthalten, in wäßriger Lösung allein oder in Mischung mit herkömmlichen, sulfonatgruppenfreien Polyvinylalkoholen unter Acetalisierungsbedingungen mit Aldehyden oder Aldehydacetalen in Gegenwart von sauren Katalysatoren umsetzt, wobei stabile, feinteilige wäßrige Polyvinylacetaldisperisonen erhalten werden können, die keine niedermolekularen Emulgatoren oder Tenside enthalten.

Der -SO₃⁻-Anteil aus dem erforderlichen Sulfonatgruppengehalt in den zugrunde liegenden copolymeren Ausgangs-PVAL-en bzw. deren Mischungen mit sulfonatgruppenfreien PVAL-en sollte vorzugsweise mindestens 1,5 Gew.-% -SO₃⁻, bezogen auf das Gewicht des wasserfreien copolymeren und Sulfonatgruppen tragenden Ausgangs-PVAL-s bzw. dessen wasserfreien Mischungen mit sulfonatgruppenfreien PVAL-en, betragen.

Besonders bevorzugt sollte der -SO₃⁻-Anteil aus den Sulfonatgruppen tragenden Comonomereinheiten in den copolymeren Ausgangs-PVAL-en bzw. deren Mischungen mit sulfonatgruppenfreien PVAL-en 2,5 bis 8 Gew.-% -SO₃⁻, insbesondere 3 bis 7 Gew.-% -SO₃⁻, bezogen auf das Gewicht des wasserfreien copolymeren und Sulfonatgruppen tragenden PVAL-s bzw. dessen wasserfreien Mischungen mit sulfonatgruppenfreien PVAL-en, betragen.

Bevorzugte Salze der copolymeren und Sulfonatgruppen tragenden Ausgangs-PVAL-e sind solche mit dissoziationsfähigen ein- oder mehrwertigen Kationen, insbesondere die Alkali- und Ammoniumsalze sowie auch die Erdalkalisalze und Aminsalze. Gegebenenfalls können in manchen Fällen auch dreiwertige Metallkationen von Interesse bzw. vorteilhaft sein. Besonders bevorzugt sind die Natrium-, Kalium- und Ammoniumsalze sowie, in manchen Fällen, auch die Calcium- und Magnesiumsalze.

Es wurde außerdem gefunden, daß bei der Acetalisierung von copolymeren PVAL-en, die Sulfonatgruppen tragende Comonomereinheiten enthalten, in wäßrigen Medien nur dann wäßrige Polyvinylacetaldispersionen erhalten werden können, wenn die Sulfonatgruppen der copolymeren PVAL-e bei der Acetalisierung in einer dissoziationsfähigen Salzform, vorzugsweise mit einwertigen Kationen, insbesondere als Alkali- oder Ammoniumsalze, und vorzugsweise in bestimmten Mengenanteilen, vorliegen. Liegen die Sulfonatgruppen des copolymeren PVAL-s bei der Acetalisierungsreaktion dagegen statt in der Salzform z.B. in ihrer freien Säureform vor, dann fällt das entstehende Polyvinylacetal nicht in einer stabilen wäßrigen Dispersionsform an.

Aus der DD-PS 222 882 A1 ist die Acetalisierung von copolymeren PVAL-en bekannt, die 1 bis 35 Gew.-%, bezogen auf den PVAL, an Comonomereinheiten gebundene freie Sulfonsäuregruppen enthalten, wobei die Sulfonsäuregruppen bei der Acetalisierungsreaktion als Säurekatalysator wirken. Bei dem beschriebenen Verfahren werden salzfreie Polyvinylacetale mit freien Sulfonsäuregruppen erhalten, die als copolymere Feststoffe anfallen und anschließend neutralisiert werden können. Es können nach dem beschriebenen Verfahren modifizierte Polyvinylacetale in wasserlöslicher, gelartiger oder körniger Form hergestellt werden. Die Herstellung oder eine Herstellungsmöglichkeit von entsprechenden wäßrigen Polyvinylacetaldispersionen ist aber weder erwähnt noch angedeutet. Polyvinylacetale mit freien Sulfonsäuregruppen sind außerdem instabil und spalten den bei der Acetalisierung gebundenen Aldehyd unter der katalytischen Säurewirkung mehr oder weniger schnell wieder ab, wobei der abgespaltene Aldehyd durch Einwirkung von Luftsauerstoff zur Säure oxidiert werden kann, die ihrerseits wiederum den Entacetalisierungsprozeß katalysieren und beschleunigen kann.

Gegenstand der Erfindung sind daher Polyvinylacetale, die emulgatorfreie wäßrige Dispersionen bilden können, und ihre wäßrigen emulgatorfreien Dispersionen, hergestellt durch Acetalisierung von Polyvinylalkoholen (PVAL-en), die Monomereinheiten aus Vinylsulfonaten enthalten, mit Aldehyden oder Aldehydacetalen unter säurekatalysierten Acetalisierungsbedingungen, dadurch gekennzeichnet, daß sie copolymere Polyvinylacetale mit zur Dispersionsbildung ausreichenden Anteilen an Sulfonatgruppen in ihrer Salzform tragenden Comonomereinheiten enthalten, die sich von copolymeren Polyvinylalkoholen (PVAL-en) ableiten, die die Sulfonatgruppen tragenden Comonomereinheiten in ihrer Salzform enthielten.

Bevorzugt sind Polyvinylacetale, deren Sulfonatgruppen in Form ihrer Alkali- oder Ammonium- oder Aminsalze vorliegen. In manchen Fällen können auch die Erdalkalisalze vorteilhaft sein.

Bevorzugt sind ferner Polyvinylacetale, bei denen der -SO₃⁻-Anteil aus den Sulfosalzgruppen in den zugrunde liegenden copolymeren Ausgangs-PVAL-en bzw. deren Mischungen mit sulfosalzgruppenfreien PVAL-en mindestens 1,5 Gew.-% -SO₃⁻, vorzugsweise 2,5 bis 8 Gew.-% -SO₃⁻, insbesondere 3 bis 7 Gew.-% -SO₃⁻, bezogen auf das Gewicht des wasserfreien copolymeren Sulfosalzgruppen enthaltenden Ausgangs-PVAL-s bzw. dessen wasserfreien Mischungen mit sulfosalzgruppenfreien PVAL-en, betrug.

Bevorzugt sind weiterhin Polyvinylacetale, deren zugrunde liegende und Sulfosalzgruppen enthaltende copolymeren Ausgangs-PVAL-e Monomereinheiten aus Vinylsulfonaten in einer Menge von 310 bis 2500 µmol, vorzugsweise 375 bis 1800 µmol, pro g wasserfreiem und Sulfonatgruppen in ihrer Salzform enthaltendem Ausgangs-PVAL bzw. dessen wasserfreien Mischungen mit sulfonatgruppenfreien PVAL-en, enthielten.

Es können auch Polyvinylacetale hergestellt werden, denen Ausgangs-PVAL-e mit geringeren oder höheren comonomeren Sulfosalzgruppenanteilen als die vorstehend angegebenen zugrunde liegen. Bei der Acetalisierung derartiger Ausgangs-PVAL-e entstehen aber bei zu niedrigen comonomeren Sulfosalzgruppengehalten und falls kein zusätzlicher wirksamer Emulgator in dem Reaktionsgemisch vorhanden ist nur instabile Dispersionen oder nichtdispergierbare Feststoffe, oder aber bei zu hohen comonomeren Sulfosalzgruppengehalten hochviskose cremige Massen oder wäßrige Polyvinylacetallösungen. Die zur Acetalisierung erfindungsgemäß vorzugsweise verwendeten und Sulfosalzgruppen enthaltenden Ausgangs-PVAL-e sowie deren acetalisierbare Mischungen mit sulfosalzgruppenfreien PVAL-en sollten daher einen in 1 gew.-%iger wäßriger Lösung bei pH 7 mittels SCD-Messung (Streaming Current Detector) ermittelbaren -SO₃⁻-Gehalt von vorzugsweise 310 bis 2500 µmol/g wasserfreiem PVAL bzw. PVAL-Mischung, insbesondere 375 bis 1800 µmol/g wasserfreiem PVAL bzw. PVAL-Mischung, besitzen. Die Sulfosalzgruppen enthaltenden Ausgangs-PVAL-e sind z.B. erhältlich durch radikalisch initiierte Copolymerisation von Vinylacetat und Na-Ethensulfonat in alkoholisch-wäßriger Lösung und anschließende Verseifung der erhaltenen Copolymerisate. Bei der Copolymerisation von Vinylacetat und Na-Ethensulfonat können zusätzlich vorzugsweise bis zu 10 Mol% weitere ethylenisch ungesättigte und copolymerisationsfähige Comonomere mitverwendet werden, wodurch sich die aus den Copolymerisaten erhältlichen und Sulfosalzgruppen enthaltenden acetalisierbaren Ausgangs-PVAL-e sowie die daraus hergestellten Polyvinylacetale in ihrem Eigenschaftsspektrum weiter variieren bzw. modifizieren lassen.

Die Herstellung der den erfindungsgemäßen Polyvinylacetalen zugrunde liegenden und Sulfonatgruppen in ihrer Salzform enthaltenden Ausgangs-PVAL-e erfolgt vorzugsweise durch Hydrolyse oder Alkoholyse von copolymeren hydrolysierbaren Polyvinylestern, die Sulfonatgruppen tragende Comonomereinheiten enthalten, oder gegebenenfalls deren Mischungen mit sulfonatgruppenfreien hydrolysierbaren Polyvinylestern. Die Hydrolyse der Polyvinylester erfolgt dabei vorzugsweise bis zu Hydrolysegraden von mindestens 70 Mol-%, insbesondere bis zu 100 Mol-%, besonders bevorzugt 84 bis 99 Mol-%, bezogen auf die Molzahl der verseifbaren Vinylestereinheiten in den Ausgangspolyvinylestern. Letztere enthalten vorzugsweise Vinylestermonomereinheiten mit 3 bis 20 C-Atomen, insbesondere Vinylacetateinheiten oder comonomere Ethylen/Vinylacetateinheiten.

Die Viskosität bzw. das daraus ermittelbare Molekulargewicht der resultierenden Sulfosalzgruppen enthaltenden Ausgangs-PVAL-e ist nicht kritisch und kann innerhalb eines weiten Bereichs variieren. Vorzugsweise liegt die Viskosität der 4 gew.-%igen wäßrigen Ausgangs-PVAL-Lösungen im Bereich von 2 bis 100 cP, insbesondere 2 bis 70 cP, besonders bevorzugt 3 bis 60 cP, ermittelt im Höppler-Viskosimeter nach DIN 53015 bei 20 °C.

Das Molekulargewicht der erfindungsgemäß verwendeten und Sulfosalzgruppen tragenden Ausgangs-PVAL-e bzw. deren Mischungen mit sulfosalzgruppenfreien PVAL-en liegt vorzugsweise im Bereich von 1000 bis 300000 g/Mol, insbesondere 2500 bis 175000 g/Mol, ermittelt nach üblichen literaturbekannten Methoden.

Den erfindungsgemäßen Polyvinylacetalen können ferner solche Sulfonatgruppen in ihrer Salzform enthaltenden copolymeren Ausgangs-PVAL-e bzw. deren Mischungen mit sulfonatgruppenfreien PVAL-en zugrunde liegen, welche durch Hydrolyse oder Alkoholyse von hydrolysierbaren copolymeren Polyvinylestern erhalten wurden, die zusätzlich bis zu insgesamt 10 Mol-%, vorzugsweise 0,1 bis 6 Mol-%, bezogen auf die copolymeren Ausgangspolyvinylester, weitere Comonomereinheiten, vorzugsweise aus der Gruppe copolymerisationsfähiger ethylenisch ungesättigter (C₃-C₁₈) Carbonsäuren oder Dicarbonsäuren bzw. deren Anhydride, Acrylsäure(C₁-C₁₈)ester, Methacrylsäure(C₁-C₁₈)ester, (C₂-C₈)-α-Olefine, weitere andere Vinyl(C₁-C₁₈)carbonsäureester, ethylenisch ungesättigte (C₃-C₁₈)Carbonsäureamide oder -nitrile, Vinylhalogenide, Vinylidenhalogenide Vinylbenzole, insbesondere Styrol, Vinylalkylbenzole, gegebenenfalls alkylsubstituierte Vinylpyridine oder Vinylpyrrolidone, enthielten.

Bevorzugte Comonomereinheiten sind Maleinsäureanhydrid und Maleinsäure, vorzugsweise in Anteilen von 1 bis 3 Mol-%.

Der Gehalt an Vinylalkoholeinheiten in den den erfindungsgemäßen Polyvinylacetalen zugrunde liegenden Sulfosalzgruppen enthaltenden Ausgangs-PVAL-en bzw. deren Mischungen mit sulfosalzgruppenfreien Ausgangs-PVALen beträgt vorzugsweise mehr als 50 Mol-%, insbesondere mehr als 70 Mol-%, besonders bevorzugt mehr als 75 Mol-%, bezogen auf die Gesamtmolzahl aller Monomereinheiten in dem Ausgangs-PVAL.

In den erfindungsgemäßen Polyvinylacetalen beträgt der Gehalt an nicht acetalisierten Vinylalkoholeinheiten vorzugsweise 15 bis 35 Gew.-%, insbesondere 18 bis 28 Gew.-%, bezogen auf das Polyvinylacetal.

Für Abmischungen vorzugsweise geeignete sulfosalzgruppenfreie Ausgangs-PVAL-e besitzen einen Hydrolysegrad von mehr als 70 Mol-%, vorzugsweise mehr als 84 Mol-%, bezogen auf die in dem Ausgangspolyvinylester enthaltenen verseifbaren Vinylestermonomereinheiten. Für Abmischungen besonders bevorzugte sulfosalzgruppenfreie Ausgangs-PVAL-e besitzen einen Hydrolysegrad zwischen 86 und 99 Mol-% und eine Viskosität ihrer 4 gew.-%igen wäßrigen Lösungen vorzugsweise zwischen 2 und 70 cP, insbesondere 3 und 60 cP, ermittelt im Höppler-Viskosimeter nach DIN 53015 bei 20 °C. Bei Abmischungen von sulfosalzgruppenhaltigen mit sulfosalzgruppenfreien Ausgangs-PVAL-en für die Acetalisierungsreaktion sollte der Anteil an sulfosalzgruppenhaltigem PVAL vorzugsweise über 25 Gew.-%, insbesondere über 50 Gew.-%, bezogen auf die PVAL-Ausgangsmischung, betragen.

Zur Herstellung erfindungsgemäßer Polyvinylacetal-Dispersionen löst man den zu acetalisierenden und Sulfosalzgruppen enthaltenden PVAL bzw. dessen Mischungen mit sulfosalzgruppenfreien PVAL-en in Wasser und setzt den PVAL bzw. die PVAL-Mischung unter der Katalyse von Säuren mit Aldehyden zum entsprechenden Acetal um. Die Synthese kann hierbei nach literaturbekannten Verfahren sowohl in Form eines Dosierverfahrens als auch in Form eines Batch-Prozesses bei entsprechenden Temperaturen durchgeführt werden. Als Säurekatalysatoren sind prinzipiell alle für die Synthese von bisher bekannten Polyvinylacetalen einsetzbaren Säuren geeeignet, beispielsweise starke Mineralsäuren, wie z.B. Salzsäure, Schwefelsäure, Phosphorsäure, Salpetersäure u.a., aber auch starke organische Säuren, wie z.B. Toluolsulfonsäuren, Chloressigsäure, Trifluoressigsäure u.a. können verwendet werden. Bevorzugt werden die Säuren in einer Menge von bis zu 110 Mol-% Protonen, bezogen auf die zur Acetalisierung eingesetzte Mol-Menge an Aldehydgruppen, eingesetzt, besonders bevorzugt sind Mengen von 0,5 bis 30 Mol-% potentiell vorhandener Protonen. Zur Acetalisierung sind prinzipiell alle Aldehyde, wie sie für die Synthese bisher bekannter Polyvinylacetale Verwendung finden, geeignet, wie z.B. aliphatische Aldehyde, vorzugsweise solche mit 1 bis 20 C-Atomen, insbesondere Formaldehyd, Acetaldehyd, Propionaldehyd, Butyraldehyd, Isononanaldehyd u.a., aromatische Aldehyde und substituierte aromatische Aldehyde mit 6 bis 20 C-Atomen, wie z.B. Benzaldehyd, cycloaliphatische Aldehyde mit 6 bis 20 C-Atomen, wie beispielsweise Cyclohexancarbaldehyd und araliphatische Aldehyde mit 7 bis 20 C-Atomen. Darüber hinaus sind auch Derivate dieser Aldehyde, wie z.B. Halogen-, Hydroxy- und Alkoxy-Derivate einsetzbar. Bevorzugt sind Butyraldehyde, insbesondere n-Butyraldehyd. Bevorzugt sind ferner Formaldehyd, Acetaldehyd, Benzaldehyd und Cyclohexancarbaldehyd.

Je nach angestrebtem Acetalisierungsgrad, der vorzugsweise bis zu 86 Mol-%, bezogen auf die Gesamtmolzahl an acetalisierbaren Vinylalkoholeinheiten im Ausgangs-PVAL betragen kann, werden die Aldehyde daher in Mengen von vorzugsweise bis zu 43 Mol-%, bezogen auf die halbe Gesamtmolzahl der acetalisierbaren Vinylalkoholeinheiten, eingesetzt, wobei ein Überschuß von bis zu 10 Mol-% Aldehyd erforderlich und vorteilhaft sein kann. Bevorzugt sind Polyvinylacetale, deren Acetalisierungsgrad, bezogen auf die Gesamtmolzahl an acetalisierbaren Vinylalkoholeinheiten, zwischen 50 und 86 Mol-%, insbesondere zwischen 60 und 80 Mol-%, liegt. Weiterhin kann der Einsatz von mehrfachfunktionell vernetzend wirkenden (C₃-C₁₀)-Dialdehyden, vorzugsweise (C₃-C₆)-Dialdehyden, wie z.B. Glutardialdehyd, Malondialdehyd, Adipindialdehyd oder Succindialdehyd, von Vorteil sein. Beim Einsatz mehrfachfunktioneller Aldehyde als Vernetzer sollte die Menge an eingesetztem Vernetzer den Wert von zwei Aldehydgruppen pro 300 Mol Vinylalkoholeinheiten nicht übersteigen. Bevorzugt ist eine Menge von bis zu zwei Aldehydgruppen pro 1000 Mol Vinylalkoholeinheiten.

Die Konzentration der zu acetalisierenden wäßrigen PVAL-Lösungen sollte unterhalb von 40 Gew.-% Ausgangs-PVAL, bevorzugt unterhalb von 30 Gew.-% PVAL, liegen. Naturgemäß ist die maximal mögliche Konzentration der PVAL-Lösungen von der Art des PVAL-s und insbesondere von dessen Molekulargewicht abhängig. Demzufolge kann der Fall eintreten, daß von PVAL-en mit sehr hohem Molekulargewicht nur Lösungen von wenigen Gew.-% herstellbar sind.

Die Acetalisierung des PVAL-s wird vorzugsweise bei Temperaturen zwischen 0 und 90 °C, insbesondere zwischen 2 und 70 °C, durchgeführt. Hierbei ist es vorteilhaft, die Reaktion bei Temperaturen unterhalb von 20 °C zu starten und nach dem Zusammengeben aller Komponenten bei höheren Temperaturen zu vervollständigen. Um ein Koagulieren der erfindungsgemäß entstandenen Polymerisatdispersionen zu vermeiden, sollte die Reaktionsmischung nur langsam auf höhere Temperaturen erwärmt werden.

Die entstehenden Polyvinylacetaldispersionen besitzen je nach Konzentration der zur Acetalisierung eingesetzten PVAL-Ausgangslösung und in Abhängigkeit vom Acetalisierungsgrad vorzugsweise Feststoffgehalte von bis zu 60 Gew.-%, vorzugsweise 5 bis 40 Gew.-%. Beim Einsatz von niedrig konzentrierten PVAL-Lösungen sind im oberen Bereich liegende Dispersions-Feststoffgehalte nicht sofort erzielbar. In diesen Fällen besteht aber prinzipiell die Möglichkeit, nach Herstellung einer erfindungsgemäßen Dispersion einen zweiten Reaktionszyklus anzuschließen, indem man in der Dispersion erneut Polyvinylalkohol löst und anschließend unter den oben aufgeführten Bedingungen acetalisiert. Gegebenenfalls kann dieses Procedere mehrfach wiederholt oder z.B. in einer Kaskadenacetalisierungsapparatur kontinuierlich durchgeführt werden. Auf diesem Wege sind auch aus sehr hochmolekularen PVAL-en Polyvinylacetaldispersionen mit hohen Feststoffgehalten erhältlich. Alternativ hierzu läßt sich der Feststoffgehalt von gering konzentrierten Polyvinylacetaldispersionen durch Abdestillieren von Wasser, vorzugsweise unter vermindertem Druck, erhöhen. Die Dispersionen können auch mittels der Ultrafiltration aufkonzentriert werden, was besonders bevorzugt ist. Die mittlere Teilchengröße der Polymerisatpartikel in den erfindungsgemäßen wäßrigen Polyvinylacetaldispersionen liegt vorzugsweise zwischen 0,1 und 3 µm, insbesondere zwischen 0,3 und 1,5 µm, besonders bevorzugt zwischen 0,5 und 1,1 µm.

Der Polymerisatanteil in den erfindungsgemäßen wäßrigen Polyvinylacetaldispersionen läßt sich durch Entfernen des Wassers erfindungsgemäß als Feststoff isolieren. Vorteilhaft kann die Isolierung der festen Produkte in wasserfreier Pulverform durch Gefriertrockung oder insbesondere durch Sprühtrocknung der wäßrigen Dispersionen erfolgen. Die auf diesem Wege erhältlichen Dispersionspulver sind erfindungsgemäß in wäßrigen Medien redispergierbar.

Die erfindungsgemäßen Polyvinylacetaldispersionen sowie auch die erfindungsgemäßen Polyvinylacetalpulver sind prinzipiell mit allen mit bekannten Polyvinylacetalen verträglichen Weichmachern und Weichmachergemischen plastifizierbar. Eine Aufstellung von handelsüblichen Weichmachern, die Angaben über deren Verträglichkeit mit z.B. Polyvinylbutyral enthält, kann der Druckschrift Modern Plastics Encyclopedia 1981/1982, Seiten 710-719, entnommen werden. Beispiele für besonders geeignete Weichmacher sind die Diester von aliphatischen Diolen mit aliphatischen Carbonsäuren, insbesondere Diester des Di-, Tri- und Tetraethylenglykols mit aliphatischen Carbonsäuren mit 6 bis 10 C-Atomen, beispielsweise 2-Ethylbuttersäure oder n-Heptansäure, ferner Diester von (C₂-C₁₂)-Dicarbonsauren, wie Adipin-, Sebazin- oder Phthalsäure mit aliphatischen (C₄-C₁₀)-Alkoholen, insbesondere Di-Hexyladipat und Di-Octyladipat, außerdem Ester langkettiger Fettsäuren mit bis zu 40 C-Atomen, insbesondere Ricinolsäureester und Ölsäureester.

Die Weichmacher können in üblichen Mengen von bis zu 40 Gew.-%, vorzugsweise bis zu 30 Gew.-%, bezogen auf den Polymerisatanteil der Dispersion bzw. auf das wasserfreie Polymerisatpulver, eingesetzt werden. Sie können sowohl den wäßrigen Dispersionen als auch den trockenen Polymerisatpulvern beigemischt werden.

Darüber hinaus sind die wäßrigen Polyvinylacetaldispersionen sowie die daraus durch Wasserentzug gewonnenen Polyvinylacetalpulver mischbar mit Füllstoffen, Pigmenten, Harzen, wassermischbaren Lösungsmitteln, wäßrigen Kunststoffdispersionen, Vernetzern, Filmbildnern, Stabilisatoren, etc.

Die erfindungsgemäßen Polyvinylacetaldispersionen besitzen minimale Filmbildetemperaturen (MFT) von bis zu 70 °C. Die minimale Filmbildetemperatur (MFT) kann durch den Zusatz von Weichmachern oder üblichen Lösungsmitteln oder Filmbildehilfsmitteln zu den wäßrigen Dispersionen, vorzugsweise wassermischbaren Lösungsmitteln, wie z.B. Methanol, Ethanol, Propanol, Butanol oder Butyldiglykolacetat, gesenkt und auf minimale Filmbildetemperaturen (MFT) zwischen 0 und 70 °C eingestellt werden. Je nach Art der Verfilmung entstehen wasserresistente, oder mehr oder minder wasserlösliche Filme. So werden beispielsweise bei der Verfilmung von verfilmungshilfsmittelfreien wäßrigen Dispersionen in der Wärme oder bei deren Verfilmung unter Mitverwendung von Lösungsmitteln in der Regel wasserfestere Filme erhalten als bei einer Verfilmung unter Mitverwendung von Weichmachern.

Weiterer Gegenstand der Erfindung ist daher ein Verfahren zur Herstellung von Polyvinylacetalen, die emulgatorfreie wäßrige Dispersionen bilden können, und ihren wäßrigen emulgatorfreien Dispersionen durch Acetalisierung von Polyvinylalkoholen (PVAL-en), die zur Dispersionsbildung ausreichende Anteile an Sulfosalzgruppen tragenden Comonomereinheiten enthalten, mit Aldehyden oder Aldehydacetalen unter säurekatalysierten Acetalisierungsbedingungen in wäßrigem Medium und Bildung von stabilen wäßrigen Polyvinylacetaldispersionen, die keine niedermolekularen Emulgatoren oder Tenside enthalten und Feststoffgehalte von vorzugsweise bis zu 60 Gew.-%, insbesondere 5 bis 40 Gew.-%, bezogen auf die wäßrige Dispersion, aufweisen können.

Gegenstand der Erfindung ist weiterhin ein Verfahren zur Herstellung von trockenen, pulverförmigen und in Wasser redispergierbaren Polyvinylacetalen durch Entzug des Wasseranteils aus den vorstehend beschriebenen emulgator- und tensidfreien erfindungsgemäßen wäßrigen Polyvinylacetaldispersionen, vorzugsweise durch Gefriertrocknung und besonders bevorzugt durch Sprühtrocknung.

Besonders bevorzugt sind die erfindungsgemäßen emulgator- und tensidfreien wäßrigen Polyvinylacetaldispersionen.

Den erfindungsgemäßen wäßrigen Polyvinylacetaldispersionen können Füllstoffe, Pigmente, Farbstoffe, Lösungsmittel, Weichmacher, andere Kunststoffdispersionen, Harze, Filmbildehilfsmittel, Lichtstabilisatoren, Vernetzer, sowie gegebenfalls auch Emulgatoren, Schutzkolloide und andere übliche Additive zugemischt werden. Die erfindungsgemäßen wäßrigen Polyvinylacetaldispersionen sind prinzipiell oberhalb ihrer jeweiligen minimalen Filmbildetemperatur (MFT) verfilmbar und können wertvolle Filme und Beschichtungen bilden, die, vergleichsweise zu Filmen und Beschichtungen aus bekannten Polyvinylacetaldispersionen, überraschend vorteilhafte Eigenschaften aufweisen können. Auch unterhalb der MFT der wäßrigen Dispersionen lassen sich Beschichtungen aus feinteiligen Polymerisatpartikeln herstellen, die nach Trocknung von aufgetragenen, wäßrigen Dispersionsschichten und Erwärmen der getrockneten und aus pulverförmigen Polymerisatpartikeln bestehenden Schichten auf Temperaturen oberhalb der Glastemperatur (T_{G}) des Polyvinylacetals zusammenhängende dichte Flächenbeschichtungen oder Filme bilden können, die eine sehr gute Haftung z.B. auf metallischen Untergründen zeigen und gegebenenfalls bei Mitverwendung von Vernetzerkomponenten durch Einbrennen bei erhöhten Temperaturen in gut haftende unlösliche Beschichtungen oder Filme überführt werden können. Aufgrund ihrer guten Haftungsfähigkeit auf diversen Materialien, insbesondere auf Glas und auf Metallen, lassen sich die erfindungsgemäßen Polyvinylacetale vielseitig als Beschichtungsmassen verwenden.

Besonders bevorzugt sind erfindungsgemäße Polyvinylbutyraldispersionen sowie die aus den Dispersionen gewonnenen trockenen und in Wasser redispergierbaren erfindungsgemäßen Polyvinylbutyralpulver. Letztere sowie auch andere erfindungsgemäße Polyvinylacetalpulver lassen sich vorteilhaft auch in nichtwäßrigen Lackzubereitungen auf organischer Lösungsmittelbasis als Bindemittelkomponente sowie gegebenenfalls auch als Korrosionsschutzkomponente für Metalle verwenden, falls die Polyvinylacetalpulver in dem gewünschten organischen Lösungsmittelmedium löslich sind. Bevorzugt werden hierbei erfindungsgemäße Polyvinylacetale in Form ihrer Ammonium- oder Aminsalze verwendet.

Die erfindungsgemäßen Polyvinylacetalpulver eignen sich auch zur Pulverbeschichtung von erwärmten festen Substraten, vorzugsweise von Metallen.

Erfindungsgemäße wäßrige Polyvinylacetaldispersionen sowie daraus gewonnene erfindungsgemäße trockene Polyvinylacetalpulver lassen sich vorteilhaft u.a. zur Herstellung von Lacken, Pigmentbindemitteln, Anstrichfarben, Tiefengrundierungen zur Verfestigung poröser Substrate, Klebstoffen, Schmelzklebern, Druckfarbenbindemitteln, lichtempfindlichen Schichten, Fotodruckplatten, Fotoresists und Folien verwenden. Die wäßrigen Dispersionen lassen sich ferner vorteilhaft zum Imprägnieren von Textilien, zur Papierleimung und Papierveredlung verwenden. Außerdem können sie auf zahlreichen Anwendungsgebieten eingesetzt werden, auf denen üblicherweise Polyvinylacetale bisher bekannter Art Verwendung finden, gegebenenfalls in Kombination mit bekannten Polyvinylacetalen, was für manche Anwendungen vorteilhaft sein kann.

Weiterer Gegenstand der Erfindung ist daher auch die vorstehend beschriebene Verwendung erfindungsgemäßer wäßriger Polyvinylacetaldispersionen sowie der aus letzteren durch Wassereliminierung hergestellten trockenen und redispergierbaren Polyvinylacetalpulver, vorzugsweise als Bestandteil von Beschichtungsmassen für diverse Substrate, vorzugsweise für Glas und Metalle, als Bindemittel für Pigmente, zur Herstellung von Druckfarben, von lichtempfindlichen Schichten, von Fotodruckplatten und Fotoresists, von Schmelzklebern, von Folien, von lösungsmittelhaltigen oder wäßrigen Klebstoffen, von Tiefengrundierungen zur Verfestigung poröser Substrate, vorzugsweise von Holz, Mauerwerk, Putz, Formsteinen, Beton, von Lackzubereitungen, gegebenenfalls unter Mitverwendung von Vernetzungsmitteln, für die Verklebung diverser Materialien wie Metalle, keramische Materialien, Kunststoffe, Fasern, Folien, Textilien, Papier, Holz, zur Herstellung von Formkörpern und Folien durch thermoplastische Verformung, als Werkstoff für thermoplastisch verarbeitbare Formkörper, als Zwischenlagenfolien bei der Herstellung von Verbundgläsern sowie als Bindemittel in Kunstharzputzen, Spachtelmassen und Bauklebern, vorzugsweise in trockenen, pulverförmigen und mit Wasser anmachbaren bzw. dispergierbaren Formulierungen.

Die Erfindung wird durch die nachfolgenden Beispiele näher erläutert.

### BEISPIELE

### Herstellung von wäßrigen emulgator- und tensidfreien Polyvinylacetaldispersionen

### Beispiel 1

In einem Reaktionsgefäß mit Rührer und Rückflußkühler werden unter N₂-Atmosphäre 1400 g eines Ethylensulfonateinheiten enthaltenden Polyvinylalkohols, hergestellt durch Hydrolyse eines Vinylacetat-Ethensulfonat-Copolymerisats, (Hydrolysegrad: 97,5 %, Na-Ethensulfonat-Gehalt: 5,2 Gew.-% (= 3,2 Gew.-% SO₃⁻), Viskosität der 4 gew.-%igen wäßrigen Lösung bei 20 °C: 5,7 cP), in 5600 g Wasser bei 90 °C gelöst. Anschließend kühlt man die Lösung auf 1 °C, setzt 37,28 g 85 gew.-%ige Phosphorsäure zu und dosiert innerhalb von 2 Stunden 780,85 g n-Butyraldehyd solchermaßen zu, daß die Temperatur der Mischung 2,5 °C nicht übersteigt. Danach wird die Mischung innerhalb von 3 Stdn. auf 30 °C erwärmt und man läßt anschließend das Reaktionsgemisch 2 Stdn. bei 30 °C nachreagieren. Anschließend wird durch Zusatz von wäßriger NaOH die Mischung auf einen pH-Wert von 6,5 eingestellt. Die dabei erhaltene stabile wäßrige Kunststoffdispersion besitzt einen Feststoffgehalt von 25,5 Gew.-% und zeigt eine Viskosität von 12,4 cP (ermittelt im Rotationsviskosimeter⁶⁾ bei 20 °C und einem Schergefälle von 386,6 s⁻¹). Der mittlere Teilchendurchmesser der Dispersion beträgt 0,8 µm⁵⁾. Die minimale Filmbildetemperatur (MFT) der Dispersion liegt oberhalb von 50 °C. Die Dispersion enthält keine niedermolekularen Emulgatoren oder Tenside.
⁶⁾ Rotationsviskosimeter der Fa. Haake, Typ VT 500.
⁵⁾ Ermittelt mit Argon-Xenon-Laser Aerosol-Spektroskopie.

Ein Teil des in Dispersionsform erhaltenen Polyvinylbutyrals wird durch Gefriertrocknung eines aliquoten Anteils der Dispersion in Form eines farblosen Pulvers isoliert. Letzteres besteht zu 77,5 Gew.-% aus Divinylbutyraleinheiten²⁾, zu 17,3 Gew.-% aus Vinylalkohol-Einheiten¹⁾, zu 3,7 Gew.-% aus Na-Ethensulfonateinheiten³⁾ und zu 1,5 Gew.-% aus Vinylacetateinheiten⁴⁾. Die Viskosität der aus dem pulverförmigen Polymerisat hergestellten 10 gew.-%igen ethanolischen Polyvinylbutyrallösung beträgt 130,9 cP (ermittelt im Höppler-Viskosimeter nach DIN 53 015 bei 20 °C).
Das pulverförmige Produkt ist in Wasser redispergierbar unter Bildung einer stabilen wäßrigen Dispersion.
^{1) 2) 3)} Berechnet mittels des SO₃⁻-Gehaltes der Ausgangs-Polyvinylalkohole und des durch Analyse bestimmten Restvinylacetatgehaltes der Acetale unter Annahme eines 100 %igen Aldehyd-Umsatzes. (Der Restbutyraldehydgehalt der Dispersion wurde mittels gaschromatographischer Anlayse (GC) in allen Fällen zu < 0,2 Gew.-% ermittelt).
⁴⁾ Ermittelt durch Hydrolyse der Vinylacetateinheiten mit überschüssigem Alkali und Rücktitration.

### Beispiel 2

In einem Reaktionsgefäß mit Rührer und Rückflußkühler werden unter N₂-Atmosphäre 289,16 g eines Ethensulfonateinheiten enthaltenden Polyvinylalkohols, hergestellt durch Hydrolyse eines Vinylacetat-Ethensulfonat-Copolymerisats, (Hydrolysegrad: 97,1 %, Na-Ethensulfonat-Gehalt: 5,2 Gew.-% (= 3,2 Gew.-% SO₃⁻), Viskosität der 4 gew.-%igen wäßrigen Lösung bei 20 °C: 5,7 cP) in 903,24 g Wasser bei 90 °C gelöst. Anschließend kühlt man die Lösung auf 1 °C, setzt 7,7 g 85 gew.-%ige Phosphorsäure zu und dosiert innerhalb von 2 Stdn. 149 g n-Butyraldehyd solchermaßen zu, daß die Temperatur der Mischung 2,5 °C nicht übersteigt. Danach wird die Mischung innerhalb von 3 Stdn. auf 30 °C erwärmt und man läßt anschließend das Reaktionsgemisch 2 Stdn. bei 30 °C nachreagieren. Anschließend wird durch Zusatz von wäßriger NaOH die Mischung auf einen pH-Wert von 6,5 eingestellt. Die dabei erhaltene stabile wäßrige Kunststoffdispersion besitzt einen Feststoffgehalt von 29,1 Gew.-%. Der mittlere Teilchendurchmesser der Dispersion beträgt 1,3 µm⁵⁾. Die minimale Filmbildetemperatur (MFT) der Dispersion liegt oberhalb von 50 °C. Die Dispersion enthält keine niedermolekularen Emulgatoren oder Tenside.
Ein Teil des in Dispersionsform erhaltenen Polyvinylbutyrals wird durch Gefriertrocknung eines aliquoten Anteils der Dispersion in Form eines farblosen Pulvers isoliert. Letzteres besteht zu 73,2 Gew.-% aus Divinylbutyraleinheiten²⁾, zu 21,4 Gew.-% aus Vinylalkoholeinheiten¹⁾, zu 3,8 Gew.-% aus Na-Ethensulfonateinheiten³⁾ und zu 1,6 Gew.-% aus Vinylacetateinheiten⁴⁾.
Das pulverförmige Produkt ist in Wasser redispergierbar unter Bildung einer stabilen wäßrigen Dispersion.

### Beispiel 3

In einem Reaktionsgefäß mit Rührer und Rückflußkühler werden unter N₂-Atmosphäre 140 g eines Ethensulfonateinheiten enthaltenden Polyvinylalkohols, hergestellt durch Hydrolyse eines Vinylacetat-Ethensulfonat-Copolymerisats, (Hydrolysegrad: 97,1 %, Na-Ethensulfonat-Gehalt: 5,2 Gew.-% (= 3,2 Gew.-% SO₃⁻), Viskosität der 4 gew.-%igen wäßrigen Lösung bei 20 °C: 5,7 cP) in 560 g Wasser bei 90 °C gelöst. Anschließend kühlt man die Lösung auf 1 °C, setzt 7,46 g 85 gew.-%ige Phosphorsäure zu und dosiert innerhalb von 2 Stdn. 73 g n-Butyraldehyd solchermaßen zu, daß die Temperatur der Mischung 2,5 °C nicht übersteigt. Danach wird die Mischung innerhalb von 3 Stdn. auf 30 °C erwärmt und man läßt anschließend das Reaktionsgemisch 2 Stdn. bei 30 °C nachreagieren. Anschließend werden in der entstandenen Dispersion weitere 105 g des o.g. Ethensulfonateinheiten enthaltenden Polyvinylalkohols bei 60 °C gelöst. Man kühlt auf 10 °C, setzt 3,73 g 85 gew.-%ige Phosphorsäure zu und dosiert anschließend 54,75 g n-Butyraldehyd während 2 Stdn. solchermaßen zu, daß die Temperatur nicht über 12 °C ansteigt. Danach wird innerhalb von 3 Stdn. auf 30 °C erwärmt und anschließend weitere 2 Stdn. bei dieser Temperatur gerührt. Danach wird durch Zusatz von wäßriger NaOH die Mischung auf einen pH-Wert von 6,25 eingestellt. Die dabei erhaltene stabile wäßrige Kunststoffdispersion besitzt einen Feststoffgehalt von 34,8 Gew.-% und eine Viskosität von 75,1 cP (ermittelt im Rotationsviskosimeter⁶⁾bei 20 °C und einem Schergefälle von 386,6 s⁻¹). Der mittlere Teilchendurchmesser der Dispersion beträgt 1,05 µm⁵⁾. Die minimale Filmbildetemperatur (MFT) der Dispersion liegt oberhalb von 50 °C. Die Dispersion enthält keine niedermolekularen Emulgatoren oder Tenside.

Ein Teil des in Dispersionsform erhaltenen Polyvinylbutyrals wird durch Gefriertrocknung eines aliquoten Anteils der Dispersion in Form eines farblosen Pulvers isoliert. Letzteres besteht zu 73,9 Gew.-% aus Divinylbutyraleinheiten²⁾, zu 20,8 Gew.-% aus Vinylalkoholeinheiten¹⁾, zu 3,7 Gew.-% aus Na-Ethensulfonateinheiten³⁾ und zu 1,6 Gew.-% aus Vinylacetateinheiten⁴⁾.
Das pulverförmige Produkt ist in Wasser redispergierbar unter Bildung einer stabilen wäßrigen Dispersion.

### Beispiel 4

In einem Reaktionsgefäß mit Rührer und Rückflußkühler werden unter N₂-Atmosphäre 112 g eines Ethensulfonateinheiten enthaltenden Polyvinylalkohols, hergestellt durch Hydrolyse eines Vinylacetat-Ethensulfonat-Copolymerisats, (Hydrolysegrad: 95,5 %, Na-Ethensulfonat-Gehalt: 10,2 Gew.-% (= 6,3 Gew.-% SO₃⁻), Viskosität der 4 gew.-%igen wäßrigen Lösung bei 20 °C: 4,8 cP) und 28 g handelsüblicher, sulfonatgruppenfreier Polyvinylalkohol(®Mowiol 4-98 der Fa. Hoechst AG, Viskosität der 4 gew.-%igen wäßrigen Lösung bei 20 °C: 4 cP, Hydrolysegrad: 98 %) in 560 g Wasser bei 90 °C gelöst. Der SO₃⁻-Gehalt der wasserfreien Polyvinylalkohol-Mischung beträgt 5 Gew.-%. Anschließend kühlt man die Lösung auf 1 °C, setzt 6,44 g 85 gew.-%ige Phosphorsäure zu und dosiert innerhalb von 2 Stdn. 68,6 g n-Butyraldehyd solchermaßen zu, daß die Temperatur der Mischung 2,5 °C nicht übersteigt. Danach wird die Mischung innerhalb von 3 Stdn. auf 30 °C erwärmt und man läßt anschließend das Reaktionsgemisch 2 Stdn. bei 30 °C nachreagieren. Anschließend wird durch Zusatz von wäßriger NaOH die Mischung auf einen pH-Wert von 6,5 eingestellt.
Die dabei erhaltene stabile wäßrige Kunststoffdispersion besitzt einen Feststoffgehalt von 24,7 Gew.-% und zeigt eine Viskosität von 38,5 cP (ermittelt im Rotationsviskosimeter⁶⁾ bei 20 °C und einem Schergefälle von 386,6 s⁻¹). Der mittlere Teilchendurchmesser der Dispersion beträgt 0,8 µm⁵⁾. Die minimale Filmbildetemperatur (MFT) der Dispersion beträgt 23 °C. Die Dispersion enthält keine niedermolekularen Emulgatoren oder Tenside.
Ein Teil des in Dispersionsform erhaltenen Polyvinylbutyrals wird durch Gefriertrocknung eines aliquoten Anteils der Dispersion in Form eines farblosen Pulvers isoliert. Letzteres besteht zu 70,7 Gew.-% aus Divinylbutyraleinheiten⁴⁾, zu 21,8 Gew.-% aus Vinylalkoholeinheiten¹⁾, zu 6,0 Gew.-% aus Na-Ethensulfonateinheiten³⁾ und zu 1,5 Gew.-% aus Vinylacetateinheiten²⁾.
Dis Viskosität der aus dem pulverförmigen Polymerisat hergestellten 10 gew.-%igen ethanolischen Polyvinylbutyrallösung beträgt 68,5 cP (ermittelt im Höppler-Viskosimeter nach DIN 53 015 bei 20 °C).

Das pulverförmige Produkt ist in Wasser redispergierbar unter Bildung einer stabilen wäßrigen Dispersion.

### Beispiel 5

In einem Reaktionsgefäß mit Rührer und Rückflußkühler werden unter N₂-Atmosphäre 1120 g eines Ethensulfonateinheiten enthaltenden Polyvinylalkohols, hergestellt durch Hydrolyse eines Vinylacetat-Ethensulfonat-Copolymerisats, (Hydrolysegrad: 96,7 %, Na-Ethensulfonat-Gehalt: 10,2 Gew.-% (= 6,3 Gew.-% SO₃⁻), Viskosität der 4 gew.-%igen wäßrigen Lösung bei 20 °C: 4,4 cP) und 280 g handelsüblicher, sulfonatgruppenfreier Polyvinylalkohol (®Mowiol 4-98 der Fa. Hoechst AG, Viskosität der 4 gew.-%igen wäßrigen Lösung bei 20 °C: 4 cP, Hydrolysegrad 98 %) in 5600 g Wasser bei 90 °C gelöst. Der SO₃⁻-Gehalt der wasserfreien Polyvinylalkohol-Mischung beträgt 5 Gew.-%. Anschließend kühlt man die Lösung auf 1 °C, setzt 66 g 85 gew.-%ige Phosphorsäure zu und dosiert innerhalb von 2 Stdn. 721 g n-Butyraldehyd solchermaßen zu, daß die Temperatur der Mischung 2,5 °C nicht übersteigt. Danach wird die Mischung innerhalb von 3 Stdn. auf 37 °C erwärmt und man läßt anschließend das Reaktionsgemisch 2 Stdn. bei 37 °C nachreagieren. Anschließend wird durch Zusatz von wäßriger NaOH die Mischung auf einen pH-Wert von 6,5 eingestellt. Die dabei erhaltene stabile wäßrige Kunststoffdispersion besitzt einen Feststoffgehalt von 22,78 Gew.-% und zeigt eine Viskosität von 187 cP (ermittelt im Rotationsviskosimeter⁶⁾ bei 20 °C und einem Schergefälle von 386,6 s⁻¹). Der mittlere Teilchendurchmesser der Dispersion beträgt 0,88 µm⁵⁾. Die minimale Filmbildetemperatur (MFT) der Dispersion beträgt 11 °C. Die Dispersion enthält keine niedermolekularen Emulgatoren oder Tenside.
Ein Teil des in Dispersionsform erhaltenen Polyvinylbutyrals wird durch Gefriertrocknung eines aliquoten Anteils der Dispersion in Form eines farblosen Pulvers isoliert. Letzteres besteht zu 73,3 Gew.-% aus Divinylbutyraleinheiten⁴⁾, zu 19,3 Gew.-% aus Vinylalkoholeinheiten¹⁾, zu 5,9 Gew.-% aus Na-Ethensulfonateinheiten³⁾ und zu 1,5 Gew.-% aus Vinylacetateinheiten²⁾.
Die Viskosität der aus dem pulverförmigen Polymerisat hergestellten 10 gew.%igen ethanolischen Polyvinylbutyrallösung beträgt 69,0 cP (ermittelt im Höppler-Viskosimeter nach DIN 53 015 bei 20 °C).
Das pulverförmige Produkt ist in Wasser redispergierbar unter Bildung einer stabilen wäßrigen Dispersion.

### Beispiel 6

In einem Reaktionsgefäß mit Rührer und Rückflußkühler werden unter N₂-Atmosphäre 980 g eines Ethensulfonateinheiten enthaltenden Polyvinylalkohols, hergestellt durch Hydrolyse eines Vinylacetat-Ethensulfonat-Copolymerisats, (Hydrolysegrad: 96,7 %, Na-Ethensulfonat-Gehalt: 10,2 Gew.-% (= 6,3 Gew.-% SO₃⁻), Viskosität der 4 gew.-%igen wäßrigen Lösung bei 20 °C: 4,4 cP) und 420 g handelsüblicher, sulfonatgruppenfreier Polyvinylalkohol (®Mowiol 4-98 der Fa. Hoechst AG, Viskosität der 4 gew.-%igen wäßrigen Lösung bei 20 °C: 4 cP, Hydrolysegrad 98 %) in 5600 g Wasser bei 90 °C gelöst. Der SO₃⁻-Gehalt der wasserfreien Polyvinylalkohol-Mischung beträgt 4,4 Gew.-%. Anschließend kühlt man die Lösung auf 1 °C, setzt 66 g 85 gew.-%ige Phosphorsäure zu und dosiert innerhalb von 2 Stdn. 733 g n-Butyraldehyd solchermaßen zu, daß die Temperatur der Mischung 2,5 °C nicht übersteigt. Danach wird die Mischung innerhalb von 3 Stdn. auf 37 °C erwärmt und man läßt anschließend das Reaktionsgemisch 2 Stdn. bei 37 °C nachreagieren. Anschließend wird durch Zusatz von wäßriger NaOH die Mischung auf einen pH-Wert von 6,5 eingestellt. Die dabei erhaltene stabile wäßrige Kunststoffdispersion besitzt einen Feststoffgehalt von 23,68 Gew.-% und zeigt eine Viskosität von 19 cP (ermittelt im Rotationsviskosimeter⁶⁾ bei 20 °C und einem Schergefälle von 386,6 s⁻¹). Der mittlere Teilchendurchmesser der Dispersion beträgt 1,1 µm⁵⁾. Die minimale Filmbildetemperatur (MFT) der Dispersion beträgt 8 °C. Die Dispersion enthält keine niedermolekularen Emulgatoren oder Tenside.
Ein Teil des in Dispersionsform erhaltenen Polyvinylbutyrals wird durch Gefriertrocknung eines aliquoten Anteils der Dispersion in Form eines farblosen Pulvers isoliert. Letzteres besteht zu 74,1 Gew.-% aus Divinylbutyraleinheiten⁴⁾, zu 19,2 Gew.-% aus Vinylalkoholeinheiten¹⁾, zu 5,1 Gew.-% aus Na-Ethensulfonateinheiten³⁾ und zu 1,5 Gew.-% aus Vinylacetateinheiten²⁾.
Die Viskosität der aus dem pulverförmigen Polymerisat hergestellten 10 gew.-%igen ethanolischen Polyvinylbutyrallösung beträgt 58,5 cP (ermittelt im Höppler-Viskosimeter nach DIN 53 015 bei 20 °C).
Das pulverförmige Produkt ist in Wasser redispergierbar unter Bildung einer stabilen wäßrigen Dispersion.

## Patentansprüche

1. Polyvinylacetale, die emulgatorfreie wäßrige Dispersionen bilden können, und ihre wäßrigen emulgatorfreien Dispersionen, hergestellt durch Acetalisierung von Polyvinylalkoholen (PVAL-en), die Monomereinheiten aus Vinylsulfonaten enthalten, mit Aldehyden oder Aldehydacetalen unter säurekatalysierten Acetalisierungsbedingungen, dadurch gekennzeichnet, daß sie copolymere Polyvinylacetale mit zur Dispersionsbildung ausreichenden Anteilen an Sulfonatgruppen tragenden Comonomereinheiten in ihrer Salzform enthalten, die sich von copolymeren Polyvinylalkoholen (PVAL-en) ableiten, die die Sulfonatgruppen tragenden Comonomereinheiten in ihrer Salzform enthielten.

2. Polyvinylacetale nach Anspruch 1, dadurch gekennzeichnet, daß die Sulfonatgruppen in Form ihrer Alkali- oder Ammonium- oder Aminsalze vorliegen.

3. Polyvinylacetale nach Anspruch 1 oder 2, dadurch gekennzeichnet, daß der -SO₃⁻-Anteil aus den Sulfonatgruppen in ihrer Salzform in den den Polyvinylacetalen zugrunde liegenden copolymeren Ausgangs-PVAL-en bzw. deren Mischungen mit sulfonatgruppenfreien PVAL-en mindestens 1,5 Gew.-% -SO₃⁻, vorzugsweise 2,5 bis 8 Gew.-% -SO₃⁻, insbesondere 3 bis 7 Gew.-% -SO₃⁻, bezogen auf das Gewicht des wasserfreien copolymeren Sulfonatgruppen in ihrer Salzform enthaltenden Ausgangs-PVAL-s bzw. dessen wasserfreien Mischungen mit sulfonatgruppenfreien PVAL-en, betrug.

4. Polyvinylacetale nach Ansprüchen 1 bis 3, dadurch gekennzeichnet, daß die den Polyvinylacetalen zugrunde liegenden und Sulfonatgruppen in ihrer Salzform enthaltenden copolymeren Ausgangs-PVAL-e Monomereinheiten aus Vinylsulfonat in einer Menge von 310 bis 2500 µmol, vorzugsweise 375 bis 1800 µmol, pro g wasserfreiem und Sulfonatgruppen in ihrer Salzform enthaltenden Ausgangs-PVAL bzw. dessen wasserfreien Mischungen mit sulfonatgruppenfreien PVAL-en, enthielten.

5. Polyvinylacetale nach Ansprüchen 1 bis 4, dadurch gekennzeichnet, daß die den Polyvinylacetalen zugrunde liegenden und Sulfonatgruppen in ihrer Salzform enthaltenden Ausgangs-PVAL-e durch Hydrolyse oder Alkoholyse von copolymeren hydrolysierbaren Polyvinylestern, die Sulfonatgruppen tragende Comonomereinheiten enthalten, oder gegebenenfalls deren Mischungen mit sulfonatgruppenfreien hydrolysierbaren Polyvinylestern, erhalten wurden und Hydrolysegrade von mindestens 70 Mol-%, vorzugsweise bis zu 100 Mol-%, insbesondere 84 bis 99 Mol-%, bezogen auf die Molzahl der verseifbaren Vinylestereinheiten in den Ausgangspolyvinylestern, besaßen, der Acetalisierungsgrad der Polyvinylacetale vorzugsweise bis zu 86 Mol-%, insbesondere 60 bis 80 Mol%, bezogen auf die Gesamtmolzahl an acetalisierbaren Vinylalkoholeinheiten im Ausgangs-PVAL, beträgt und die Viskosität der 4 gew.-%igen wäßrigen Ausgangs-PVAL-Lösungen im Bereich von 2 bis 100 cP, vorzugsweise 2 bis 70 cP, insbesondere 3 bis 60 cP, ermittelt im Höppler-Viskosimeter nach DIN 53015 bei 20 °C, lag.

6. Polyvinylacetale nach Ansprüchen 1 bis 5, dadurch gekennzeichnet, daß die den Polyvinylacetalen zugrunde liegenden copolymeren und Sulfonatgruppen in ihrer Salzform tragenden Ausgangs-PVAL-e bzw. deren Mischungen mit sulfonatgruppenfreien PVAL-en durch Hydrolyse oder Alkoholyse von copolymeren hydrolysierbaren Polyvinylestern erhalten wurden, die zusätzlich bis zu insgesamt 10 Mol-%, vorzugsweise 0,1 bis 6 Mol-%, bezogen auf die copolymeren Ausgangspolyvinylester, weitere Comonomereinheiten, vorzugsweise aus der Gruppe copolymerisationsfähiger ethylenisch ungesättigter (C₃-C₁₈) Carbonsäuren oder Dicarbonsäuren bzw. deren Anhydride, Acrylsäure(C₁-C₁₈)ester, Methacrylsäure(C₁-C₁₈)ester, (C₂-C₈)-α-Olefine, weitere andere Vinyl (C₁-C₁₈)carbonsäureester, ethylenisch ungesättigte (C₃-C₁₈)Carbonsäureamide oder -nitrile, Vinylhalogenide, Vinylidenhalogenide, Vinylbenzole, Vinylalkylbenzole, Vinylpyridine oder Vinylpyrrolidone, enthielten.

7. Polyvinylacetale nach Ansprüchen 1 bis 6, dadurch gekennzeichnet, daß die den Polyvinylacetalen zugrunde liegenden und Sulfonatgruppen in ihrer Salzform enthaltenden Ausgangs-PVAL-e aus Abmischungen von sulfonatgruppenhaltigen und sulfonatgruppenfreien PVAL-en bestehen, wobei der Anteil an sulfonatgruppenhaltigem PVAL vorzugsweise über 25 Gew.-%, insbesondere über 50 Gew.-%, bezogen auf die PVAL-Ausgangsmischung, beträgt.

8. Polyvinylacetale nach Ansprüchen 1 bis 7, dadurch gekennzeichnet, daß der Gehalt an Vinylalkoholeinheiten in den den Polyvinylacetalen zugrunde liegenden Ausgangs-PVAL-en mehr als 50 Mol-%, vorzugsweise mehr als 75 Mol-%, bezogen auf die Gesamtmolzahl aller Monomereinheiten in dem Ausgangs-PVAL, betrug.

9. Polyvinylacetale nach Ansprüchen 1 bis 8, dadurch gekennzeichnet, daß ihr Gehalt an nicht acetalisierten Vinylalkoholeinheiten 15 bis 35 Gew.-%, vorzugsweise 18 bis 28 Gew.-%, bezogen auf das Polyvinylacetal, beträgt.

10. Polyvinylacetale nach Ansprüchen 1 bis 9, dadurch gekennzeichnet, daß ihre Herstellung durch Acetalisierung der zugrunde liegenden Ausgangs-PVAL-e bzw. Ausgangs-PVAL-Gemische in wäßriger Lösung unter Zusatz von Säurekatalysatoren, vorzugsweise aus der Gruppe Salzsäure, Schwefelsäure, Salpetersäure, Phosphorsäure, mit (C₁-C₂₀)aliphatischen, (C₆-C₂₀)aromatischen, (C₇-C₂₀)araliphatischen oder (C₆-C₂₀)cycloaliphatischen Aldehyden, die durch Hydroxylgruppen oder Halogenatome substituiert sein können, vorzugsweise mit aliphatischen (C₁-C₂₀)-Aldehyden, insbesondere Formaldehyd, Acetaldehyd, Propionaldehyd, iso-Nonanaldehyd, besonders bevorzugt Butyraldehyd, ferner bevorzugt Benzaldehyd oder Cyclohexancarbaldehyd, erfolgte und die Polyvinylacetale in wäßriger Dispersionsform oder, nach Eliminierung des Wasseranteils aus der Dispersion, in fester redispergierbarer Pulverform erhalten wurden.

11. Polyvinylacetale nach Ansprüchen 1 bis 10, dadurch gekennzeichnet, daß sie in Form von wäßrigen Kunststoffdispersionen vorliegen, die keine niedermolekularen Emulgatoren oder Tenside enthalten und Feststoffgehalte von vorzugsweise bis zu 60 Gew.-%, insbesondere 5 bis 40 Gew.-%, bezogen auf die wäßrige Dispersion, besitzen und die mittleren Teilchendurchmesser der Polymeren vorzugsweise im Bereich von 0,1 bis 3 µm, insbesondere 0,3 bis 1,5 µm, liegen.

12. Polyvinylacetale nach Ansprüchen 1 bis 11, dadurch gekennzeichnet, daß sie in Form von feinteiligen redispergierbaren Pulvern vorliegen, die aus wäßrigen Polyvinylacetaldispersionen durch Wasserentzug, vorzugsweise durch Sprühtrocknung oder gegebenenfalls durch Gefriertrocknung, hergestellt wurden.

13. Verfahren zur Herstellung von Polyvinylacetalen nach Ansprüchen 1 bis 12, die emulgatorfreie wäßrige Dispersionen bilden können, und ihren wäßrigen emulgatorfreien Dispersionen durch Acetalisierung von Polyvinylalkholen (PVAL-en), die Monomereinheiten aus Vinylsulfonat enthalten, mit Aldehyden oder Aldehydacetalen unter Säurekatalyse in wäßrigem Medium, dadurch gekennzeichnet, daß man copolymere PVAL-e, die Sulfonatgruppen in ihrer Salzform tragende Comonomereinheiten in zur Dispersionsbildung ausreichenden Anteilen enthalten oder deren zur Dispersionsbildung befähigten Mischungen mit sulfonatgruppenfreien PVAL-en in wäßriger Lösung unter Zusatz eines Säurekatalysators mit der stöchiometrisch erforderlichen Menge von Aldehyden oder Aldehydacetalen unter Acetalisierungsbedingungen in Abwesenheit von niedermolekularen Emulgatoren oder Tensiden unter Bildung von stabilen wäßrigen Polyvinylacetaldispersionen umsetzt und die resultierenden Dispersionen gewinnt, oder den Polymerisatgehalt der resultierenden wäßrigen Dispersionen durch Wasserentzug, vorzugsweise durch Gefriertrocknung und besonders bevorzugt durch Sprühtrocknung, in einer trockenen und in Wasser redispergierbaren Pulverform gewinnt.

14. Verfahren nach Anspruch 13, dadurch gekennzeichnet, daß man als Aldehyd n-Butyraldehyd einsetzt.

15. Polyvinylacetale nach Ansprüchen 1 bis 14, dadurch gekennzeichnet, daß sie nach ihrer Herstellung durch Weichmacherzusatz plastifiziert wurden.

16. Polyvinylacetale nach Anspruch 15, dadurch gekennzeichnet, daß sie bis zu 40 Gew.-%, vorzugsweise bis zu 30 Gew.-%, bezogen auf das Polyvinylacetal, Weichmacher aus der Gruppe Diester des Di-, Tri- oder Tetraethylenglykols mit aliphatischen (C₆-C₁₀)Carbonsäuren, Diester von (C₂-C₁₂)Dicarbonsäuren, vorzugsweise von Adipin-, Sebazin- oder Phthalsäure, mit aliphatischen (C₄-C₁₀)Alkoholen, Ester von Fettsäuren mit bis zu 40 C-Atomen, enthalten.

17. Verwendung von wäßrigen Polyvinylacetaldispersionen sowie den daraus hergestellten trockenen redispergierbaren pulverförmigen Polyvinylacetalen nach Ansprüchen 1 bis 16 als Bestandteil von Beschichtungsmassen für diverse Substrate, vorzugsweise für Glas und Metalle, als Bindemittel für Pigmente, zur Herstellung von Druckfarben, von lichtempfindlichen Schichten, von Fotodruckplatten und Fotoresists, von Schmelzklebern, von Folien, von lösungsmittelhaltigen oder wäßrigen Klebstoffen, von Tiefengrundierungen zur Verfestigung poröser Substrate, von Lackzubereitungen, gegebenenfalls unter Mitverwendung von Vernetzungsmitteln, für die Verklebung diverser Materialien wie Metalle, keramische Materialien, Kunststoffe, Fasern, Folien, Textilien, Papier, Holz, zur Herstellung von Formkörpern und Folien durch thermoplastische Verformung, als Werkstoff für thermoplastisch verarbeitbare Formkörper, als Zwischenlagenfolien bei der Herstellung von Verbundgläsern sowie als Bindemittel in Kunstharzputzen, Spachtelmassen und Bauklebern, vorzugsweise in trockenen, pulverförmigen und mit Wasser anmachbaren bzw. dispergierbaren Formulierungen.

## Claims

1. A polyvinyl acetal which can form an emulsifier-free aqueous dispersion and its aqueous emulsifier-free dispersion, prepared by acetalization of a polyvinyl alcohol (PVAL) containing monomer units of vinyl sulfo salt groups, with an aldehyde or aldehyde actal under acid-catalyzed acetalization conditions, which polyvinyl acetal comprises a copolymeric polyvinyl acetal with, in amounts sufficient to form a dispersion, comonomer units carrying sulfo salt groups which are derived from a copolymeric polyvinyl alcohol (PVAL) which contained the comonomer units carrying the sulfonate groups in the salt form.

2. A polyvinyl acetal as claimed in claim 1, wherein the sulfonate groups are in the form of their alkali metal or ammonium or amine salts.

3. A polyvinyl acetal as claimed in claim 1 or 2, wherein the -SO₃⁻ content from the sulfo salt groups in the copolymeric starting PVAL on which the polyvinyl acetal is based or a mixture thereof with a PVAL which is free from sulfo salt groups was at least 1.5% by weight of -SO₃⁻, preferably 2.5 to 8% by weight of -SO₃⁻, in particular 3 to 7% by weight of -SO₃⁻, based on the weight of the anhydrous copolymeric starting PVAL containing sulfo salt groups, or an anhydrous mixture thereof with a PVAL which is free from sulfo salt groups.

4. A polyvinyl acetal as claimed in claims 1 to 3, wherein the copolymeric starting PVAL containing sulfo salt groups on which the polyvinyl acetal is based contained monomer units of vinylsulfonate, in an amount of 310 to 2500 µmol, in particular 375 to 1800 µmol, per g of anhydrous starting PVAL containing sulfo salt groups, or an anhydrous mixture thereof with a PVAL which is free from sulfo salt groups.

5. A polyvinyl acetal as claimed in claims 1 to 4, wherein the starting PVAL containing sulfo salt groups on which the polyvinyl acetal is based was obtained by hydrolysis or alcoholysis of a copolymeric hydrolyzable polyvinyl ester, which contains comonomer units carrying sulfonate groups, or if appropriate a mixture thereof with a hydrolyzable polyvinyl ester which is free from sulfonate groups, and had a degree of hydrolysis of at least 70 mol%, preferably up to 100 mol%, in particular 84 to 99 mol%, based on the number of moles of hydrolyzable vinyl ester units in the starting polyvinyl ester, the degree of acetalization of the polyvinyl acetal is preferably up to 86 mol%, in particular 60 to 80 mol%, based on the total number of moles of acetalizable vinyl alcohol units in the starting PVAL, and the viscosity of the 4% strength by weight aqueous starting PVAL solutions was in the range from 2 to 100 cP, preferably 2 to 70 cP, in particular 3 to 60 cP, determined in a Höppler viscometer in accordance with DIN 53015 at 20°C.

6. A polyvinyl acetal as claimed in claims 1 to 5, wherein the copolymeric starting PVAL carrying sulfo salt groups on which the polyvinyl acetal is based, or a mixture thereof with a PVAL which is free from sulfo salt groups, was obtained by hydrolysis or alcoholysis of a copolymeric hydrolyzable polyvinyl ester which additionally contained up to 10 mol% in total, preferably 0.1 to 6 mol%, based on the copolymeric starting polyvinyl ester, of other comonomer units, preferably from the group comprising copolymerizable ethylenically unsaturated (C₃-C₁₈)carboxylic acids or dicarboxylic acids or anhydrides thereof, acrylic acid (C₁-C₁₈)esters, methacrylic acid (C₁-C₁₈)esters, (C₂-C₈)-α-olefins, other further vinyl(C₁-C₁₈)carboxylic acid esters, ethylenically unsaturated (C₃-C₁₈)carboxylic acid amides or nitriles, vinyl halides, vinylidene halides, vinylbenzenes, vinylpyridines and vinylpyrrolidones.

7. A polyvinyl acetal as claimed in claims 1 to 6, wherein the starting PVAL containing sulfo salt groups on which the polyvinyl acetal is based comprises a mixture of a PVAL containing sulfo salt groups and a PVAL which is free from sulfo salt groups, the content of PVAL containing sulfo salt groups preferably being more than 25% by weight, in particular more than 50% by weight, based on the PVAL starting mixture.

8. A polyvinyl acetal as claimed in claims 1 to 7, wherein the content of vinyl alcohol units in the starting PVAL on which the polyvinyl acetal is based was more than 50 mol%, preferably more than 75 mol%, based on the total number of moles of all the monomer units in the starting PVAL.

9. A polyvinyl acetal as claimed in claims 1 to 8, wherein its content of non-acetalized vinyl alcohol units is 15 to 35% by weight, preferably 18 to 28% by weight, based on the polyvinyl acetal.

10. A polyvinyl acetal as claimed in claims 1 to 9, wherein its preparation was carried out by acetalization of the starting PVAL or starting PVAL mixture on which the product is based in aqueous solution with addition of an acid catalyst, preferably from the group comprising hydrochloric acid, sulfuric acid, nitric acid and phosphoric acid, in particular phosphoric acid, with a (C₁-C₂₀)aliphatic, (C₆-C₂₀)aromatic, (C₇-C₂₀)araliphatic or (C₆-C₂₀)cycloaliphatic aldehyde, which can be substituted by hydroxyl groups or halogen atoms, preferably with an aliphatic (C₁-C₂₀)-aldehyde, in particular formaldehyde, acetaldehyde, propionaldehyde or isononanaldehyde, particularly preferably butyraldehyde, and furthermore preferably benzaldehyde or cyclohexanecarbaldehyde, and the polyvinyl acetal was obtained in the form of an aqueous dispersion or, after elimination of the water content from the dispersion, in a solid, redispersible powder form.

11. A polyvinyl acetal as claimed in claims 1 to 10, which is in the form of an aqueous dispersion of plastic which contains no low molecular weight emulsifier or surfactant and has a solids content of preferably up 60% by weight, in particular 5 to 40% by weight, based on the aqueous dispersion, and wherein the average particle diameter of the polymer is preferably in the range from 0.1 to 3 µm, in particular 0.3 to 1.5 µm.

12. A pblyvinyl acetal as claimed in claims 1 to 11, which is in the form of a finely divided redispersible powder which has been prepared from an aqueous polyvinyl acetal dispersion by removal of water, preferably by spray drying or, if appropriate, by freeze drying.

13. A process for the preparation of a polyvinyl acetal as claimed in claims 1 to 12 which can form an emulsifier-free aqueous dispersion, and its aqueous emulsifier-free dispersion by acetalization of a polyvinyl alcohol (PVAL) with an aldehyde or aldehyde acetal under acid catalysis in an aqueous medium, which comprises reacting a copolymeric PVAL which contains comonomer units carrying sulfo salt groups in an amount sufficient to form a dispersion, or a mixture thereof, which is capable of forming a dispersion, with a PVAL which is free from sulfo salt groups with the stoichiometrically required amount of an aldehyde or aldehyde acetal in aqueous solution with addition of an acid catalyst under acetalization conditions in the absence of a low molecular weight emulsifier or surfactant to form a stable aqueous polyvinyl acetal dispersion, and obtaining the resulting dispersion, or isolating the polymer content of the resulting aqueous dispersion in a dry, water-redispersible powder form by removal of water, preferably by freeze drying, and particularly preferably by spray drying.

14. The process as claimed in claim 13, wherein n-butyraldehyde is employed as the aldehyde.

15. A polyvinyl acetal as claimed in claims 1 to 14, which has been plasticized by addition of plasticizer after its preparation.

16. A polyvinyl acetal as claimed in claim 15, which comprises up to 40% by weight, preferably up to 30% by weight, based on the polyvinyl acetal, of a plasticizer from the group comprising diesters of di-, tri- or tetraethylene glycol with aliphatic (C₆-C₁₀)carboxylic acids, diesters of (C₂-C₁₂)dicarboxylic acids, preferably of adipic, sebacic or phthalic acid, with aliphatic (C₄-C₁₀) alcohols and esters of fatty acids having a total of up to 40 carbon atoms.

17. The use of an aqueous polyvinyl acetal dispersion or of the dry, redispersible pulverulent polyvinyl acetal prepared therefrom as claimed in claims 1 to 16 as a constituent of a coating composition for various substrates, preferably for glass and metal, as a binder for pigments, for the production of printing inks, of photosensitive layers, of photographic printing plates and photoresists, of hot melt adhesives, of films, of solvent-containing or aqueous adhesives, of deep primers for consolidation of porous substrates or of coating formulations, if appropriate also using crosslinking agents, for gluing various materials, such as metal, ceramic materials, plastics, fibers, films, textiles, paper and wood, for the production of shaped articles and films by thermoplastic shaping, as a material for shaped articles which can be processed thermoplastically, as intermediate film layers for the production of laminated glasses and as a binder in synthetic resin plasters, stopping compositions and construction adhesives, preferably in a dry, pulverulent formulation which can be made up or dispersed with water.

## Revendications

1. Poly(acétals de vinyle), qui sont capables de former des dispersions aqueuses sans émulsionnants, et leurs dispersions aqueuses sans émulsionnants, préparés par acétalisation des poly(alcools vinyliques) (PVAL) qui comportent des motifs monomères de sulfonate de vinyle, avec des aldéhydes ou des aldéhydacétals par acétalisation catalysée par un acide, caractérisés en ce qu'ils contiennent des poly(acétals de vinyle) copolymères comportant des motifs comonomères porteurs de groupes sulfonate sous leur forme salifiée en taux suffisants pour la formation de dispersions, et dont dérivent les poly(alcools vinyliques) (PVAL) copolymères qui contenaient les motifs comonomères porteurs des groupes sulfonate sous leur forme salifiée.

2. Poly(acétals de vinyle) selon la revendication 1, caractérisés en ce que les groupes sulfonate sont présents sous forme de leurs sels alcalins ou d'ammonium ou d'amine.

3. Poly(acétals de vinyle) selon la revendication 1 ou 2, caractérisés en ce que le taux en -SO₃⁻ à partir des groupes sulfonate sous leur forme salifiée dans les PVAL de départ copolymères dont dérivent les poly(acétals de vinyle), ou leurs mélanges avec des PVAL sans groupes sulfonate est d'au moins 1,5 % en -SO₃⁻, de préférence de 2,5 à 8 % en poids de -SO₃⁻, plus particulièrement de 3 à 7 % en poids de -SO₃⁻ par rapport au poids du PVAL de départ copolymère anhydre comportant des groupes sulfonate sous leur forme salifiée ou bien de ses mélanges anhydres avec des PVAL sans groupes sulfonate.

4. Poly(acétals de vinyle) selon les revendications 1 à 3, caractérisés en ce que les PVAL de départ copolymères dont dérivent les poly(acétals de vinyle) et qui contiennent des groupes sulfonate sous leur forme salifiée, comportent des motifs monomères de sulfonate de vinyle dans une quantité de 310 à 2500 µmoles, de préférence de 375 à 1800 µmoles, par g de PVAL de départ anhydre et contenant des groupes sulfonate sous leur forme salifiée ou de ses mélanges avec des PVAL sans groupes sulfonate.

5. Poly(acétals de vinyle) selon les revendications 1 à 4, caractérisés en ce que l'on obtient les PVAL de départ, dont dérivent les poly(acétals de vinyle), et contenant des groupes sulfonate sous leur forme salifiée, par hydrolyse ou alcoolyse des esters polyvinyliques copolymères hydrolysables contenant des motifs comonomères porteurs de groupes sulfonate, ou éventuellement de leurs mélanges avec des esters polyvinyliques hydrolysables, ne contenant pas de groupes sulfonate, et avaient des degrés d'hydrolyse d'au moins 70 % en moles, de préférence jusqu'à 100 % en moles, de manière particulière de 84 à 99 % en moles, par rapport au nombre de moles de motifs esters vinyliques saponifiables dans les esters polyvinyliques de départ, le degré d'acétalisation des poly(acétals de vinyle) est de préférence jusqu'à 86 % en moles, plus particulièrement de 60 à 80 % en moles, par rapport au nombre total de moles en motifs alcools vinyliques acétalisables dans le PVAL de départ, et la viscosité des solutions aqueuses à 4 % de PVAL de départ est dans l'intervalle de 2 à 100 cP, de préférence de 2 à 70 cP, plus particulièrement de 3 à 60 cP, déterminée dans un viscosimètre d'Höppler selon la norme DIN 53015 à 20 °C.

6. Poly(acétals de vinyle) selon les revendications 1 à 5, caractérisés en ce que les PVAL de départ copolymères et porteurs de groupes sulfonate sous leur forme salifiée, dont dérivent les poly(acétals de vinyle), ou bien leurs mélanges avec des PVAL sans groupes sulfonate, que l'on obtient par hydrolyse ou alcoolyse des esters polyvinyliques hydrolysables copolymères, qui contiennent de plus jusqu'à 10 % en moles au total, de préférence de 0,1 à 6 % en moles, par rapport aux esters polyvinyliques de départ copolymères, d'autres motifs comonomères, de préférence pris dans le groupe des acides dicarboxyliques ou carboxyliques en C₃-C₁₈, à insaturation éthylénique copolymérisables ou de leurs anhydrides, des esters en C₁-C₁₈ de l'acide acrylique, des esters en C₁-C₁₈ de l'acide méthacrylique, des α-oléfines en C₂-C₈, d'autres esters vinylcarboxyliques en C₁-C₁₈, des amides ou nitriles d'acides carboxyliques en C₃-C₁₈ à insaturation éthylénique, des halogénures de vinyle, des halogénures de vinylidène, des vinylbenzènes, des vinylalkylbenzènes, des vinylpyridines ou des vinylpyrrolidones.

7. Poly(acétals de vinyle) selon les revendications 1 à 6, caractérisés en ce que les PVAL de départ contenant des groupes sulfonate sous leur forme salifiée et dont dérivent les poly(acétals de vinyle) sont constitués de mélanges de PVAL contenant des groupes sulfonate et sans groupes sulfonate, le taux en PVAL contenant des groupes sulfonate étant de préférence supérieur à 25 % en poids, plus particulièrement supérieur à 50 % en poids, par rapport au mélange de départ de PVAL.

8. Poly(acétals de vinyle) selon les revendications 1 à 7, caractérisés en ce que la teneur en motifs alcool vinylique dans les PVAL de départ, dont dérivent les poly(acétals de vinyle), est supérieure à 50 % en moles, de préférence supérieure à 75 % en moles par rapport au nombre total de moles de tous les motifs monomères dans le PVAL de départ.

9. Poly(acétals de vinyle) selon les revendications 1 à 8, caractérisés en ce que leur teneur en motifs alcool vinylique non acétalisés est de 15 à 35 % en poids, de préférence de 18 à 28 % en poids par rapport au poly(acétal de vinyle).

10. Poly(acétals de vinyle) selon les revendications 1 à 9, caractérisés en ce qu'ils sont préparés par acétalisation des PVAL de départ de base ou bien des mélanges de PVAL de départ, en solution aqueuse sous addition de catalyseurs acides, de préférence pris dans le groupe comportant l'acide chlorhydrique, l'acide sulfurique, l'acide nitrique, l'acide phosphorique, avec des aldéhydes aliphatiques en C₁-C₂₀, aromatiques en C₆-C₂₀, araliphatiques en C₇-C₂₀ ou cycloaliphatiques en C₂-C₂₀, que l'on peut substituer par des groupes hydroxyle ou des atomes d'halogène, de préférence avec des aldéhydes aliphatiques en C₁-C₂₀, plus particulièrement le formaldéhyde, l'acétaldéhyde, le propionaldéhyde, l'iso-nonanaldéhyde, de manière particulièrement préférée le butyraldéhyde, de plus de préférence le benzaldéhyde ou le cyclohexanecarbaldéhyde, et on obtient les poly(acétals de vinyle) sous forme de dispersion aqueuse ou, après avoir éliminé le taux en eau de la dispersion, sous forme pulvérulente solide redispersable.

11. Poly(acétals de vinyle) selon les revendications 1 à 10, caractérisés en ce qu'ils se présentent sous forme de dispersions aqueuses de matières plastiques, qui ne contiennent pas d'émulsionnants ni d'agents de surface de bas poids moléculaire et qui présentent des teneurs en extrait sec de préférence allant jusqu'à 60 % en poids, plus particulièrement de 5 à 40 % en poids par rapport à la dispersion aqueuse et la granulométrie moyenne des polymères se trouve de préférence dans l'intervalle de 0,1 à 3 µm, plus particulièrement de 0,3 à 1,5 µm.

12. Poly(acétals de vinyle) selon les revendications 1 à 11, caractérisés en ce qu'ils se présentent sous forme de poudres redispersables finement divisées, que l'on prépare à partir des dispersions aqueuses de poly(acétals de vinyle) par élimination de l'eau, de préférence par séchage par pulvérisation ou éventuellement par lyophilisation.

13. Procédé de préparation de poly(acétals de vinyle) selon les revendications 1 à 12, capables de former des dispersions aqueuses, et de leurs dispersions aqueuses sans émulsionnants, par acétalisation des poly(alcools vinyliques) (PVAL) qui contiennent des motifs monomères de sulfonate de vinyle, avec des aldéhydes ou des aldéhydacétals en milieu aqueux sous catalyse acide, caractérisé en ce que l'on fait réagir des PVAL copolymères contenant des motifs comonomères porteurs de groupes sulfonate sous leur forme salifiée, en taux suffisants pour la formation de dispersions, ou leurs mélanges capables de former des dispersions avec des PVAL sans groupes sulfonate, en solution aqueuse sous addition d'un catalyseur acide, avec des quantités stoechiométriques d'aldéhydes ou d'aldéhydacétals dans des conditions d'acétalisation en l'absence d'émulsionnants ou d'agents de surface de bas poids moléculaire, en formant des dispersions aqueuses stables de poly(acétals de vinyle) et l'on obtient les dispersions résultantes, ou la teneur en polymère des dispersions aqueuses résultantes, sous forme de poudre sèche redispersable dans l'eau, par élimination de l'eau, de préférence par lyophilisation et de manière particulièrement préférée par séchage par pulvérisation.

14. Procédé selon la revendication 13, caractérisé en ce que l'on utilise en tant qu'aldéhyde le n-butyraldéhyde.

15. Poly(acétals de vinyle) selon les revendications 1 à 14, caractérisés en ce qu'on les plastifie après leur préparation par ajout de plastifiant.

16. Poly(acétals de vinyle) selon la revendication 15, caractérisés en ce qu'ils contiennent jusqu'à 40 % en poids, de préférence jusqu'à 30 % en poids, par rapport aux poly(acétals de vinyle), de plastifiant pris dans le groupe des diesters du di-, tri- ou tétraéthylèneglycol avec des acides carboxyliques en C₆-C₁₀ aliphatiques, des diesters avec des acides dicarboxyliques en C₂-C₁₂, de préférence de l'acide adipique, de l'acide sébacique ou de l'acide phtalique, avec des alcools aliphatiques en C₄-C₁₀, des esters d'acides gras avec jusqu'à 40 atomes de carbone.

17. Utilisation de dispersions aqueuses de poly(acétals de vinyle) ainsi que des poly(acétals de vinyle) pulvérulents, secs, redispersables, préparés à partir de celles-ci selon les revendications 1 à 16 comme constituants de matières d'enduction de différents substrats, de préférence de verre et de métaux, comme liants de pigments, dans la préparation d'encres d'imprimerie, de couches photosensibles, d'épreuves photographiques et de photorésists, de colles à fusion, de feuilles, de colles contenant des solvants ou aqueuses, des apprêts en profondeur pour la consolidation de substrats poreux, de préparations de vernis, éventuellement en utilisant conjointement des agents réticulants, pour le collage de différentes matières telles que les métaux, les matières céramiques, les matières plastiques, les fibres, les feuilles, les matières textiles, le papier, le bois, pour la préparation de corps moulés et de feuilles par moulage thermoplastique, comme matériau pour les corps moulés par traitement thermoplastique, comme feuilles intercalaires dans la préparation de verres feuilletés, ainsi que comme liants dans les enduits de résines synthétiques, dans les mastics et les colles de bâtiment, de préférence sous forme de formulations sèches pulvérulentes et diluables, ou bien dispersable dans l'eau.
